# EUROPÄISCHE PATENTSCHRIFT

(11) **EP 1 563 238 B1**
(45) Veröffentlichungstag und Bekanntmachung des Hinweises auf die Patenterteilung: **10.10.2007**
(21) Anmeldenummer: 03776891.8
(22) Anmeldetag: 08.11.2003
(51) Int. Cl.: F26B 17/04, F26B 23/00

(54) **KONVEKTIVES TROCKNUNGSVERFAHREN**
METHOD FOR CONVECTION DRYING
PROCEDE DE SECHAGE PAR CONVECTION

(30) Priorität: 15.11.2002 DE 10253558
(43) Veröffentlichungstag der Anmeldung: 17.08.2005
(73) Patentinhaber: Klein Abwasser- und Schlammtechnik Gmbh, 57548 Kirchen (DE)
(72) Erfinder: TOMALLA, Manfred, 57223 Kreuztal (DE)
(74) Vertreter: Behrendt, Arne
(86) Internationale Anmeldenummer: PCT/EP2003/012490
(87) Internationale Veröffentlichungsnummer: WO 2004/046629

(56) Entgegenhaltungen:
- DE-A- 10 005 165
- DE-A- 19 654 093
- DE-A- 19 825 597
- DE-C- 505 017
- DE-C- 506 267

## Beschreibung

Die Erfindung betrifft ein Verfahren zur konvektiven Trocknung von Naß- oder Feuchtgut, wobei das zu trocknende Gut in einem Trockner mit einem erwärmten Trocknungsgas beaufschlagt wird, welches beim Trocknungsvorgang zunächst in dem zu trocknenden Gut enthaltenes Wasser aufnimmt und welchem dann das aufgenommene Wasser durch Kondensation wieder entzogen wird.

Außerdem betrifft die Erfindung eine Trocknungsanlage zur Durchführung dieses Verfahrens.

Aus der industriellen und kommunalen Abwasserreinigung fallen große Klärschlammengen an, welche als sehr wasserreiche Rohschlämme vorliegen. Bevor diese Schlämme einer weiteren Verwendung, beispielsweise als Dünger in der Landwirtschaft oder auch als Brennstoff, zugeführt werden können, kann es erforderlich sein, daß zum Zwecke der Entwässerung eine Trocknung durchgeführt wird. In jedem Fall ist es wünschenswert, einen möglichst hoch entwässerten Schlamm zu erhalten, sei es aufgrund der besseren Lagerfähigkeit oder aus energetischen Gründen, falls die Schlämme zum Zwecke der Mineralisierung einer Verbrennung zugeführt werden soll.

An Verfahren zur Trocknung derartiger Materialien sind verschiedene Anforderungen zu stellen. Zum einen ist es erforderlich, daß das zu trocknende Gut beim Trocknungsvorgang möglichst schonend behandelt wird, damit Abrieb vermieden und Staubentwicklung verhindert wird. Aus wirtschaftlichen Gründen und aus Gründen des Umweltschutzes ist ein niedriger Energieverbrauch für das Trocknungsverfahren wünschenswert. Aus hygienischen Gründen ist es erforderlich, daß das zu trocknende Gut, das häufig mit Geruchs-, Schadstoffen und auch mit Keimen belastet ist, während des Trocknungsvorgangs auf hohe Temperaturen erhitzt und dadurch pasteurisiert wird. Desweiteren ist anzustreben, daß bei der Trocknung möglichst wenig Kondensate und/oder Abgase anfallen und daß diese möglichst gering mit Geruchs- und Schadstoffen belastet sind.

Die DE 506 267 C stellt nach diesseitiger Auffassung den nächstkommenden Stand der Technik dar, und betrifft einen so genannten Kanalstufentrockner mit Wärmezufuhr, bei dem der Trockenkanal durch Querwände in Kammern unterteilt ist. Innerhalb jeder Kammer wird das Trocknungsgas (Luft) in einem geschlossenen Kreislauf geführt, wobei das dem zu trocknenden Gut entnommene Wasser dem Trocknungsgas durch Kondensation wieder entzogen wird. Die dabei anfallende Kondensationswärme wird rekuperativ zurückgewonnen und zur Erwärmung des Trocknungsgases in den nachfolgenden Kammern genutzt. Weiter ist

aus der DE 43 05 543 C2 ein Trocknungsverfahren der eingangs genannten Art bekannt. Bei dem vorbekannten Verfahren wird das zu trocknende Gut mittels eines Bandtrockners getrocknet. Das zur Trocknung verwendete Trocknungsgas wird mittels eines Verbrennungsofens erhitzt und durchströmt das auf dem Brandtrockner befindliche Gut von unten nach oben, wobei das Trocknungsgas das in dem zu trocknenden Gut enthaltene Wasser aufnimmt. Nach dem Trocknungsvorgang wird das Trocknungsgas aus dem Trockner mittels eines Gebläses abgeführt, Wobei die in dem abgeführten Trocknungsgas enthaltene Wärme dazu genutzt wird, das zu trocknende Gut in einem dem Trockner vorgeschalteten Vorwärmer zu erwärmen, um dadurch Energie einzusparen. Nach Durchlaufen des Vorwärmers wird dem Trocknungsgas das beim Trocknungsvorgang aufgenommene Wasser durch Kondensation wieder entzogen. Das Kondensat wird abgeführt und an die Umwelt abgegeben. Die entstehende Kondensationswärme wird - wiederum aus Gründen der Energieeinsparung - zur Erwärmung der Verbrennungsluft verwendet, welche dem zur Erwärmung des Trocknungsgases dienenden Verbrennungsofen zugeführt wird.

Ein wesentlicher Nachteil des vorbekannten Trocknungsverfahrens besteht darin, daß nur ein kleiner Teil der mittels des Verbrennungsofens erzeugten Wärmeenergie für die Trocknung nutzbar ist. Gemäß dem vorbekannten Verfahren werden zwar Maßnahmen zur Energierückgewinnung getroffen, eine optimale Ausnutzung der eingesetzten Energie erfolgt jedoch nicht. Nachteilig ist bei dem vorbekannten Verfahren des weiteren, daß damit die oben angesprochene Hygienisierung des zu trocknenden Guts problematisch ist. Damit das zu trocknende Gut durch eine ausreichend lange Behandlung bei ausreichend hohen Temperaturen hygienisch unbedenklich wird, muß bei dem vorbekannten Verfahren sehr viel Energie aufgewendet werden, um das wasserreiche Gut in der erforderlichen Weise zu erwärmen. Bei derartigen Temperaturen werden aus dem zu trocknenden Gut große Mengen von Geruchs- und Schadstoffen ausgetrieben, was bei dem vorbekannten Verfahren dazu führt, daß das abgeführte Kondensat stark belastet ist und nicht ohne eine geeignete Nachbehandlung an die Umwelt abgegeben werden kann.

Der vorliegenden Erfindung liegt die Aufgabenstellung zugrunde, ein weiterentwickeltes Trocknungsverfahren zu schaffen, bei welchem der Energieverbrauch minimal ist und bei welchem insbesondere eine Hygienisierung des zu trocknenden Guts auf effektive Weise möglich ist.

Ausgehend von einem Verfahren zur konvektiven Trocknung der eingangs genannten Art wird diese Aufgabenstellung dadurch gelöst, daß das zu trocknende Gut wenigstens eine Trocknungsstufe durchläuft, in welcher das Trocknungsgas in einem geschlossenen Kreislauf zirkuliert, wobei in dieser Trocknungsstufe entstehende Kondensationswärme dazu genutzt wird, in wenigstens einer nachfolgenden Trocknungsstufe das Trocknungsgas zu erwärmen.

Durch die Mehrstufigkeit des erfindungsgemäßen Verfahrens wird es vorteilhafterweise ermöglicht, die zur Erwärmung des Trocknungsgases eingesetzte Energie effektiv für die Trocknung einzusetzen. Daraus resultiert ein besonders geringer Energieverbrauch des erfindungsgemäßen Verfahrens. Dadurch daß das zu trocknende Gut zunächst wenigstens eine Trocknungsstufe durchläuft, in welcher das Trocknungsgas in einem geschlossenen Kreislauf zirkuliert, ist sichergestellt, daß keinerlei mit Schadstoffen belastetes Abgas entsteht und daß an dieser Stelle keine Wärmeenergie ungenutzt an die Umwelt abgegeben wird. Insbesondere wenn diese Trocknungsstufe bei hoher Temperatur betrieben wird, werden Wärmeverluste verhindert und die bei der Kondensation des in dieser Trocknungsstufe zirkulierenden Trocknungsgases anfallende Kondensationswärme kann auf einfache Weise zur Erwärmung des in nachfolgenden Trocknungsstufen eingesetzten Trocknungsgases verwendet werden. Daraus daß gemäß der Erfindung die bei der Trocknung von außen zugeführte Wärme vollständig und teilweise mehrfach für den Trocknungsvorgang genutzt wird, resultiert ein minimaler Energieverbrauch. Ein im Sinne der Erfindung geschlossener Trocknungsgas-Kreislauf liegt auch vor, wenn dem Kreislauf während des Betriebs des Trockners geringe Gasmengen zugesetzt bzw. entzogen werden, um beispielsweise das umlaufende Trocknungsgas zu erneuern.

Besonders vorteilhaft ist bei dem erfindungsgemäßen Verfahren, daß das zu trocknende Gut nach Durchlaufen einer Trocknungsstufe in einer Zwischenstufe einer Hygienisierung unterzogen werden kann, indem das Gut auf eine vorgegebene Temperatur erwärmt wird, wobei weder Abgas abgeführt, noch Kondensat erzeugt wird. Die Mehrstufigkeit des Trocknungsverfahrens gestattet es, daß die Hygienisierung erst erfolgt, nachdem der Wassergehalt des zu trocknenden Guts in einer vorangegangenen Trocknungsstufe stark reduziert wurde. Die zur Hygienisierung erforderliche Erwärmung des zu trocknenden Guts auf entsprechend hohe Temperaturen kann - im Unterschied zu den aus dem Stand der Technik bekannten Trocknungsverfahren - mit vergleichsweise geringem Energieaufwand erfolgen, da das Gut bereits vorgetrocknet ist. In der Hygienisierungsstufe muß das teilgetrocknete Gut auf Temperaturen von mehr als 70°C, möglichst 80°C, gebracht werden. Dies erfolgt zweckmäßigerweise durch Beaufschlagung des Guts mit einem entsprechend erwärmten gasförmigen Medium, bei welchem es sich um Luft, Rauchgas, Inertgas oder ein je nach Beschaffenheit des Guts ausgewähltes Gas handeln kann. In der zur Hygienisierung vorgesehenen Zwischenstufe des erfindungsgemäßen Verfahrens wird weder Abgas abgeführt, noch Kondensat erzeugt, so daß keinerlei Geruchs-, Schadstoffe oder Keime an die Umwelt abgegeben werden. Dies ist wiederum nur möglich, da gemäß der Erfindung das Gut bei der Hygienisierung bereits vorgetrocknet ist.

Um bei dem erfindungsgemäßen Verfahren die Effizienz der Energieausnutzung weiter zu steigern, ist es sinnvoll, außerdem die Wärme, welche in dem in einer Trocknungsstufe anfallenden Kondensat enthalten ist, dazu zu nutzen, das Trocknungsgas in einer nachfolgenden Trocknungsstufe zu erwärmen. Hierzu können beispielsweise geeignete Kondensatoren verwendet werden bei welchen das aus dem Kondensator abgeführte Kondensat umgewälzt und in den Kondensator zurückgeführt wird, wobei in der Kondensatleitung ein Wärmetauscher vorgesehen ist, mittels welchem das in der nachfolgenden Trocknungsstufe eingesetzte Trocknungsgas erwärmt wird.

Zweckmäßigerweise kann bei dem erfindungsgemäßen Verfahren das zu trocknende Gut nach Durchlaufen einer Trocknungsstufe, in welcher das Trocknungsgas im geschlossenen Kreislauf zirkuliert, wenigstens eine nachfolgende Trocknungsstufe durchlaufen, in welcher das mittels Kondensationswärme erwärmte Trocknungsgas nach dem Trocknungsvorgang zumindest zum Teil als Abgas abgeführt wird. In einer solchen Trocknungsstufe muß entsprechend der als Abgas abgeführten Gasmenge frisches Trocknungsgas von außen zugeführt werden. Hierbei kann es sich beispielsweise um Außenluft handeln. Die erfindungsgemäße Nutzung der Kondensationswärme kann auf diese Weise besonders effektiv erfolgen, da das von außen zugeführte Trocknungsgas vergleichsweise kalt ist, so daß ein effektiver Übergang der in einer vorangegangenen Trocknungsstufe anfallenden Kondensationswärme auf das in der nachfolgenden Trocknungsstufe zu erwärmende Trocknungsgas sichergestellt ist. Die gute Kondensationswärmenutzung führt wiederum dazu, daß der Energieverbrauch des erfindungsgemäßen Verfahrens minimiert wird.

Bei dem mehrstufigen Trocknungsverfahren gemäß der Erfindung ist es besonders zweckmäßig, zur Erwärmung des Trocknungsgases in wenigstens einer Trocknungsstufe Abwärme, insbesondere Kraftwerksabwärme, zu nutzen. Durch Kraft-Wärme-Kopplung kann demgemäß die Trocknung mit besonders niedrigem Energieverbrauch erfolgen. Abwärme steht üblicherweise bei Temperaturen zwischen 40°C und 90°C zur Verfügung. Die Temperatur hängt von der Abwärmequelle ab. Beispielsweise bei Blockheizkraftwerken steht die Abwärme aus der Motor- und Rauchgaskühlung zwischen 70°C und 90°C als Kühlwasser zur Verfügung. Je nach Temperatur sollte bei dem erfindungsgemäßen Verfahren die Abwärme in einer Trocknungsstufe eingesetzt werden, bei welcher die erforderliche Temperatur des Trocknungsgases eine ausreichend effektive Wärmeübertragung von der Abwärmequelle auf das Trocknungsgas gewährleistet.

Es ist sinnvoll, wenn in Trocknungsstufen des Verfahrens gemäß der Erfindung, in welchen das Trocknungsgas im geschlossenen Kreislauf zirkuliert, die Temperatur des zu trocknenden Guts höchstens 70°C beträgt. Bei einer solchen Temperatur werden nämlich nur in sehr geringem Maße Geruchs-, Schadstoffe und Keime aus dem zu trocknenden Gut ausgetragen. Dies führt dazu, daß das abgeführte Kondensat nur sehr gering belastet ist. Außerdem wird durch Temperaturen von weniger als 70°C gewährleistet, daß sich die Staubentwicklung beim Trocknungsvorgang in Grenzen hält. Dadurch wird die Gefahr von Staubexplosionen reduziert, ohne daß besondere Sicherheitsvorkehrungen getroffen werden müssen. Zwar reicht die Temperatur von 70°C in der Regel nicht aus, das zu trocknende Gut zu hygienisieren. Hierzu ist jedoch - wie oben skizziert - die einer Trocknungsstufe nachgeschaltete Hygienisierungsstufe vorgesehen, bei welcher weder Abgase, noch Kondensate entstehen.

Zweckmäßigerweise sollte die Temperatur des Trocknungsgases in keiner Trocknungsstufe 120°C überschreiten. Bei höheren Temperaturen kann es zur Selbstentzündung eines beim Trocknungsvorgang entstehenden Staub-LuftGemisches kommen, es besteht dann die Gefahr von Staubexplosionen.

Es ist im Sinne einer möglichst guten Ausnutzung der zugeführten Wärmeenergie sinnvoll, wenn bei dem erfindungsgemäßen Verfahren die Temperatur des Trocknungsgases von Trocknungsstufe zu Trocknungsstufe abnimmt. Auf diese Weise kann effektiv die anfallende Kondensationswärme von vorangehenden Trocknungsstufen auf nachfolgende Trocknungsstufen übertragen werden. Außerdem ist vorteilhaft, daß demgemäß keine Energie verschwendet wird, wenn das Gut nach dem Trocknungsvorgang abkühlt und dabei die in dem Gut gespeicherte Wärme an die Umgebung abgibt. Trotzdem kann es ggf. erforderlich sein, daß das Gut nach der Trocknung eine Abkühlungsstufe durchläuft, in welcher das Gut unter Zufuhr von Frischluft abgekühlt wird. Dabei kann gleichzeitig noch eine Resttrocknung erfolgen.

Zur Durchführung des erfindungsgemäßen Verfahrens eignet sich eine Trocknungsanlage mit einem innerhalb eines Trockners angeordneten Fördermittel zum Transport von zu trocknendem Gut durch den Trockner, mit Vorrichtungen zum Erwärmen von Trocknungsgas und mit Gebläsevorrichtungen zur Beaufschlagung des zu trocknenden Guts mit dem Trocknungsgas. Dabei weist der Trockner zumindest zwei Trocknungskammern auf, durch welche das zu trocknende Gut nacheinander gefördert wird, wobei zumindest eine Trocknungskammer einen geschlossenen Trocknungsgas-Kreislauf mit einem Kondensator aufweist und wobei zumindest eine weitere, in Förderrichtung des Fördermittels nachfolgende Trocknungskammer einen mit dem Kondensator verbundenen Wärmetauscher zur Erwärmung des Trocknungsgases aufweist. Vorteilhafterweise kann die Mehrzahl der bei dem erfindungsgemäßen Verfahren erforderlichen Trocknungsstufen in einem einzigen Trocknergehäuse zusammengefaßt werden, wobei das zu trocknende Gut von dem Fördermittel von einer Trocknungskammer in die nächste gefördert wird. Dies hat gleichzeitig den Vorteil, daß die von dem Trocknungsgas auf das zu trocknende Gut übertragene Wärme mit dem Trocknungsgut transportiert wird und nicht verloren geht. Das gilt auch für die bei der Hygienisierung auf das Gut übergegangene Wärme, welche beim Weitertransport in Trocknungsstufen, die der zur Hygienisierung vorgesehenen Zwischenstufe nachfolgen, transportiert wird und dort als Trocknungswärme zur Verfügung steht.

Zur besonders schonenden Behandlung des zu trocknenden Guts ist es zweckmäßig, bei der erfindungsgemäßen Trocknungsanlage als Fördermittel einen Bandförderer mit einem gasdurchlässigen Förderband zu verwenden, wobei das Förderband in den Trocknungskammern von dem Trocknungsgas mittels den Gebläsevorrichtungen ein- oder mehrfach von unten nach oben durchströmt wird.

Da - wie oben beschrieben - bei dem erfindungsgemäßen Verfahren die Hygienisierung des Guts in einer eigens hierfür vorgesehenen Zwischenstufe erfolgt, sollte die Trocknungsanlage eine von den Trocknungskammern separate Hygienisierungskammer mit Mitteln zum Erhitzen des zu trocknenden Guts aufweisen. In der Trocknungskammer wird das gasförmige Medium, mit welchem das Gut zur Erwärmung auf die zur Hygienisierung erforderlichen Temperaturen beaufschlagt wird, in einem geschlossenen Kreislauf geführt, so daß weder Abgase noch Kondensate abgeführt werden müssen. Damit das Gut bei der Hygienisierung bereits vorgetrocknet ist, muß die Hygienisierungskammer einer Trocknungskammer der erfindungsgemäßen Trocknungsanlage in Förderrichtung des Fördermittels nachfolgen.

Falls Abwärme, insbesondere Kraftwerksabwärme, für die Trocknung genutzt werden soll, muß hierfür wenigstens eine Trocknungskammer der erfindungsgemäßen Anlage einen Wärmetauscher aufweisen, mittels welchem Abwärme auf das Trocknungsgas übertragbar ist.

Eine sinnvolle Weiterbildung der Trocknungsanlage besteht gemäß der Erfindung darin, wenigstens eine Wärmepumpe vorzusehen, die gleichzeitig als Kondensator und als Vorrichtung zum Erwärmen des Trocknungsgases dient. Der Einsatz einer Wärmepumpe gestattet es, gleichzeitig mehrere Stufen des Trocknungsverfahrens zu bedienen, in denen entweder eine Kondensation erfolgt oder eine Erwärmung des Trocknungsgases erforderlich ist. Die Wärme zum Verdampfen des Arbeitsmittels der Wärmepumpe kann dem Trocknungsgas bei der Kondensation in denjenigen Trocknungsstufen entnommen werden, in denen das Trocknungsgas in einem geschlossenen Kreislauf zirkuliert. Die von der Wärmepumpe abgegebene Wärme kann gemäß der Erfindung in nachgeschalteten Stufen zur Trocknung genutzt werden.

Ausführungsbeispiele der Erfindung werden im folgenden anhand der Zeichnungen erläutert. Es zeigen:
- Fig.1:: Trocknungsanlage gemäß der Erfindung;
- Fig.2:: Kondensator zur Wärmerückgewinnung gemäß der Erfindung.

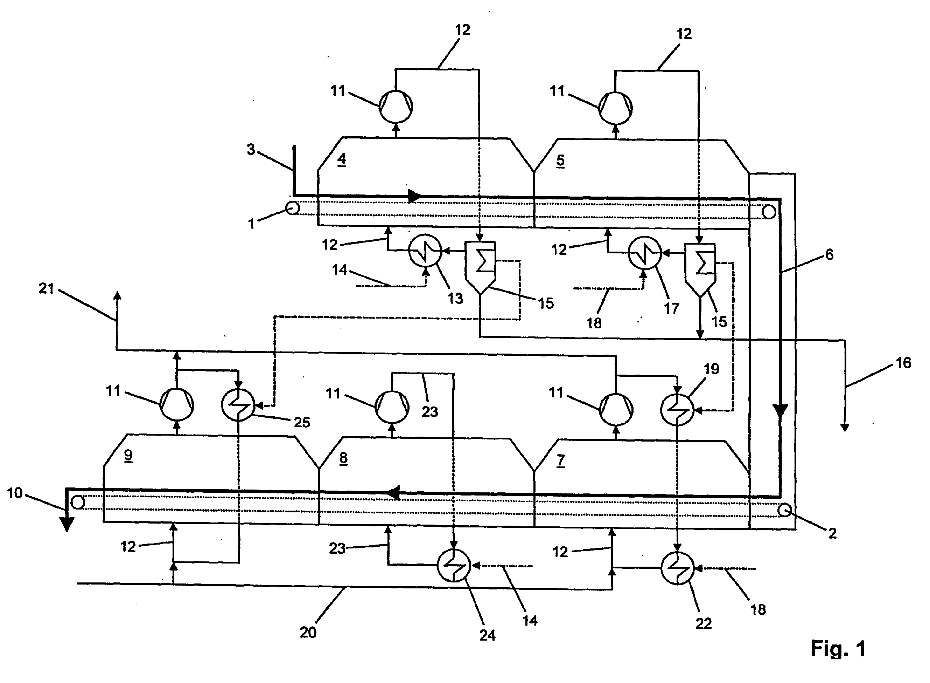

Die Fig.1 zeigt einen schematischen Vertikalschnitt durch eine Trocknungsanlage, bei welcher zwei Bandförderer 1 und 2 übereinander angeordnet sind. Zu trocknendes Gut 3 wird auf den Bandförderer 1 aufgegeben und durchläuft dann zunächst nacheinander zwei Trocknungskammern 4 und 5. Nach Durchlaufen der Trocknungskammer 5 fällt vorgetrocknetes Gut 6 auf den Bandförderer 2, von welchem es zunächst durch eine weitere Trocknungskammer 7, dann durch eine Hygienisierungskammer 8 und zuletzt durch eine Trocknungskammer 9 gefördert wird. Am Ende wird getrocknetes Gut 10 von der dargestellten Trocknungsanlage abgegeben. Die erste Trocknungskammer 4 weist eine Gebläsevorrichtung 11 auf, mittels welcher erreicht wird, daß das zu trocknende Gut 3, das sich auf dem gasdurchlässigen Förderband des Bandförderers 1 befindet, von unten nach oben von Trocknungsgas 12 durchströmt wird. Das der Trocknungskammer 4 zugeführte Trocknungsgas 12 wird mittels eines Thermoölkessels 13 erwärmt, wozu Brennstoff 14 zugeführt wird. Die Trocknungskammer 4 weist einen geschlossenen Trocknungsgas-Kreislauf auf. Mittels des Gebläses 11 wird das aus der Trocknungskammer 4 abgeführte Trocknungsgas 12 einem Kondensator 15 zugeführt. In dem Kondensator 15 wird dem Trocknungsgas das beim Trocknungsvorgang aufgenommene Wasser entzogen, und danach wird das Trocknungsgas erneut mittels des Thermoölkessels 13 erwärmt. In dem Kondensator 15 anfallendes überschüssiges Kondensat 16 wird aus der Trocknungsanlage abgeführt. Die der Trocknungskammer 4 nachfolgende Trocknungskammer 5 ist ähnlich aufgebaut. Auch die Trocknungskammer 5 weist einen geschlossenen Trocknungsgas- Kreislauf auf, wobei auch in dem Trocknungsgas-Kreislauf der Trocknungskammer 5 ein Gebläse 11 sowie ein Kondensator 15 angeordnet sind. Zur Erwärmung des Trocknungsgases 12 dient in diesem Fall jedoch ein Wärmetauscher 17, mittels welchem Abwärme 18, beispielsweise Kraftwerksabwärme, zur Erwärmung des Trocknungsgases 12 nutzbar ist. Statt dessen kann an dieser Stelle auch - wie bei der vorgeschalteten Trocknungskammer 4 - ein mit Brennstoff betriebener Verbrennungsofen verwendet werden. Der der Trocknungskammer 5 zugeordnete Kondensator 15 ist mit einem Wärmetauscher 19 der nachfolgenden Trocknungskammer 7 verbunden. Die in dem Kondensator 15 der Trocknungskammer 5 anfallende Kondensationswärme kann dadurch zur Erwärmung des in der Trocknungskammer 7 eingesetzten Trocknungsgases 12 genutzt werden. Die Trocknungskammer 7 weist einen teilweise offenen Trocknungsgaskreislauf auf, bei welchem Frischluft 20 zugeführt und nach dem Trocknungsvorgang ein Teil des Trocknungsgases 12 als Abgas 21 abgeführt wird. Der Trocknungskammer 7 ist ein weiterer Wärmetauscher 22 zugeordnet, welcher zur Erwärmung des Trocknungsgases 12 mittels Abwärme 18 genutzt wird. Die nachfolgende Hygienisierungskammer 8 weist einen geschlossenen Kreislauf auf, mittels welchem ein gasförmiges Medium 23 umgewälzt wird. Um in der Hygienisierungskammer 8 das weitgehend vorgetrocknete Gut auf die zur Hygienisierung erforderlichen Temperaturen zu erwärmen, ist ein weiterer Verbrennungsofen 24 vorgesehen, der mit Brennstoff 14 betrieben wird. In der letzten Trocknungskammer 9 der dargestellten Trocknungsanlage erfolgt eine Resttrocknung, wozu die Trocknungskammer 9 einen teilweise offenen Trocknungsgas-Kreislauf aufweist. In dem Trocknungsgas-Kreislauf der Trocknungskammer 9 ist ein Wärmetauscher 25 vorgesehen, durch welchen die in dem Kondensator 15 der Trocknungskammer 4 anfallende Kondensationswärme zur Erwärmung des in der Trocknungskammer 9 zirkulierenden Trocknungsgases 12 genutzt werden kann. Gleichzeitig dient die Trocknungskammer 9 aber dazu, das getrocknete Gut unter Ausnutzung der niedrigen Temperatur der Frischluft 20 abzukühlen.

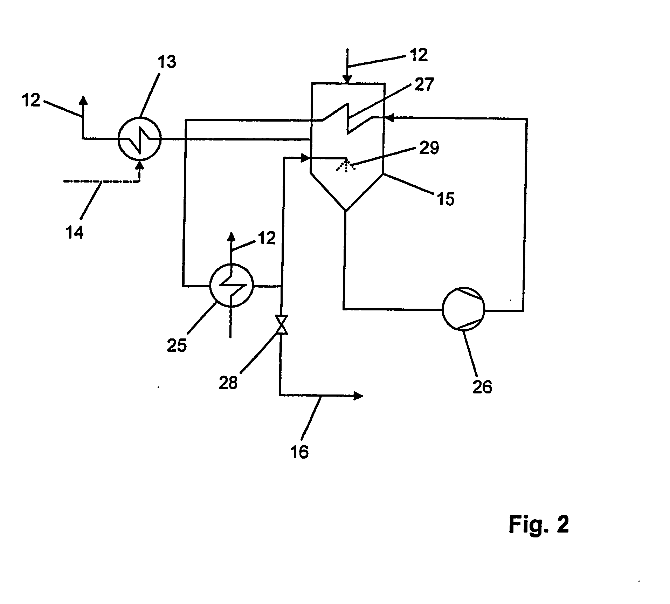

Der in der Fig.2 gezeigte Kondensator 15 kann beispielsweise bei der Trocknungskammer 4 der in der Fig.1 dargestellten Trocknungsanlage zur Kondensation des umlaufenden Trocknungsgases 12 eingesetzt werden. Das in dem Kondensator 15 anfallende Kondensat wird mittels einer Umwälzpumpe 26 in einen in dem Kondensator 15 angeordneten Wärmetauscher 27 gefördert. Dadurch nimmt das Kondensat aus dem in den Kondensator 15 eingeleiteten, ggf. überhitzten Trocknungsgas 12 zusätzlich Wärme auf. Danach wird die in dem Kondensat enthaltene Wärme mittels des Wärmetauschers 25 auf das beispielsweise in der Trocknungskammer 9 eingesetzte Trocknungsgas 12 übertragen. Überschüssiges Kondensat 16, dessen Menge mittels eines Drosselventils 28 regelbar ist, wird abgeführt. Der Rest des Kondensats wird in den Kondensator 15 über eine Düse 29 zurückgeführt.

## Patentansprüche

1. Verfahren zur konvektiven Trocknung von Naß- oder Feüchtgut, wobei das zu trocknende Gut in einem Trockner wenigstens eine Trocknungsstufe durchläuft und dort mit einem erwärmten Trocknungsgas beaufschlagt wird, welches in dieser Trockungsstufe im geschlossenen Kreislauf zirkuliert und beim Trocknungsvorgang in dem zu trocknenden Gut enthaltenes Wasser aufnimmt und welchem dann das aufgenommene Wasser durch Kondensation wieder entzogen wird, wobei die in dieser Trocknungsstufe entstehende Kondensationswärme dazu genutzt wird, in wenigstens einer nachfolgenden Trocknungsstufe das Trocknungsgas zu erwärmen, **dadurch gekennzeichnet, daß** das zu trocknende Gut nach Durchlaufen einer Trocknungsstufe in einer Zwischenstufe einer Hygienisierung unterzogen wird, indem das Gut auf eine vorgegebene Temperatur von mehr als 70° C, möglichst 80° C, erwärmt wird, wobei weder Abgas abgeführt noch Kondensat erzeugt wird.

2. Verfahren nach Anspruch 1, **dadurch gekennzeichnet, daß** die Wärme, welche in dem in einer Trocknungsstufe anfallenden Kondensat enthalten ist, dazu genutzt wird, das Trocknungsgas in einer nachfolgenden Trocknungsstufe zu erwärmen.

3. Verfahren nach Anspruch 1 oder 2, **dadurch gekennzeichnet, daß** das zu trocknende Gut nach Durchlaufen einer Trocknungsstufe, in welcher das Trocknungsgas im geschlossenen Kreislauf zirkuliert, wenigstens eine nachfolgende Trocknungsstufe durchläuft, in welcher das mittels Kondensationswärme erwärmte Trocknungsgas nach dem Trocknungsvorgang zumindest zum Teil als Abgas abgeführt wird.

4. Verfahren nach einem der Ansprüche 1 bis 3, **dadurch gekennzeichnet, daß** zur Erwärmung des Trocknungsgases in wenigstens einer Trocknungsstufe Abwärme, insbesondere Kraftwerksabwärme, genutzt wird.

5. Verfahren nach einem der Ansprüche 1 bis 4, **dadurch gekennzeichnet, daß** in einer Trocknungsstufen, in welcher das Trocknungsgas im geschlossenen Kreislauf zirkuliert, die Temperatur des zu trocknenden Guts höchstens 70°C beträgt.

6. Verfahren nach einem der Ansprüche 1 bis 5, **dadurch gekennzeichnet, daß** in keiner Trocknungsstufe die Temperatur des Trocknungsgases 120°C überschreitet.

7. Verfahren nach einem der der Ansprüche 1 bis 6, **dadurch gekennzeichnet, daß** von Trocknungsstufe zu Trocknungsstufe die Temperatur des Trocknungsgases abnimmt.

8. Verfahren nach einem der Ansprüche 1 bis 7, **dadurch gekennzeichnet, daß** das Gut nach der Trocknung eine Abkühlungsstufe durchläuft, in welcher das Gut unter Zufuhr von Frischluft abgekühlt wird.

9. Trocknungsanlage mit einem innerhalb eines Trockners angeordneten Fördermittel (1, 2) zum Transport von zu trocknendem Gut (3) durch den Trockner, mit Vorrichtungen (13, 17, 19, 22, 25) zum Erwärmen von Trocknungsgas (12), und mit Gebläsevorrichtungen (11) zur Beaufschlagung des zu trocknenden Guts (3) mit dem Trocknungsgas (12), wobei der Trockner zumindest zwei Trocknungskammern (4, 5, 7, 9) aufweist, durch welche das zu trocknende Gut (3) nacheinander gefördert wird, und wobei zumindest eine Trocknungskammer (4, 5) einen geschlossenen Trocknungsgas-Kreislauf mit einem Kondensator (15) aufweist und wobei zumindest eine weitere, in Förderrichtung des Fördermittels (1, 2) nachfolgende Trocknungskammer (7, 9) einen mit dem Kondensator (15) verbundenen Wärmetauscher (19, 25) zur Erwärmung des Trocknungsgases (12) aufweist,
**gekennzeichnet durch** eine einer Trocknungskammer (7) nachgeordnete Hygienisierungskammer (8) mit Mitteln (24) zum Erhitzen des zu trocknenden Guts (3) auf wenigstens 70°C, möglichst 80° C, wobei die Hygienisierungskammer (8) keine Abgasabfuhr und keine Kondensatabfuhr aufweist.

10. Trocknungsanlage nach Anspruch 9, **dadurch gekennzeichnet, daß** das Fördermittel (1, 2) ein Bandförderer mit einem gasdurchlässigen Förderband ist, wobei das Förderband in den Trocknungskammern (4, 5, 7, 9) von dem Trocknungsgas (12) mittels den Gebläsevorrichtungen (11) durchströmt wird.

11. Trocknungsanlage nach Anspruch 9 oder 10, **dadurch gekennzeichnet, daß** wenigstens eine Trocknungskammer (5, 7) einen Wärmetauscher aufweist, mittels welchem das Trocknungsgas (12) durch Abwärme (18), insbesondere Kraftwerksabwärme, erwärmbar ist.

12. Trocknungsanlage nach einem der Ansprüche 9 bis 11, **gekennzeichnet durch** wenigstens eine Wärmepumpe, die gleichzeitig als Kondensator und als Vorrichtung zum Erwärmen des Trocknungsgases dient.

## Claims

1. A method of convective drying of wet or moist material, wherein the material to be dried passes through at least one drying stage in a drier and is there acted upon with a heated drying gas which circulates in a closed circuit in that drying stage and which in the drying operation absorbs water contained in the material to be dried and from which then the absorbed water is removed again by condensation, wherein the heat of condensation produced in that drying stage is used to heat the drying gas in at least one following drying stage, **characterised in that** after passing through a drying stage the material to be dried is subjected to a hygienisation operation in an intermediate stage by the material being heated to a predetermined temperature of more than 70°C, if possible 80°C, wherein neither waste gas is discharged nor condensate is produced.

2. A method according to claim 1 **characterised in that** the heat which is contained in the condensate produced in a drying stage is used to heat the drying gas in a subsequent drying stage.

3. A method according to claim 1 or claim 2 **characterised in that** after passing through a drying stage in which the drying gas circulates in the closed circuit the material to be dried passes through at least one subsequent drying stage in which the drying gas which is heated by means of heat of condensation is at least partly discharged in the form of waste gas after the drying operation.

4. A method according to one of claims 1 to 3 **characterised in that** waste heat, in particular power station waste heat, is used for heating the drying gas in at least one drying stage.

5. A method according to one of claims 1 to 4 **characterised in that** the temperature of the material to be dried is at most 70°C in a drying stage in which the drying gas circulates in the closed circuit.

6. A method according to one of claims 1 to 5 **characterised in that** the temperature of the drying gas does not exceed 120°C in any drying stage.

7. A method according to one of claims 1 to 6 **characterised in that** the temperature of the drying gas decreases from one drying stage to another.

8. A method according to one of claims 1 to 7 **characterised in that** after the drying procedure the material passes through a cooling stage in which the material is cooled with a feed of fresh air.

9. A drying installation comprising a conveyor means (1, 2) arranged within a drier for transporting material (3) to be dried through the drier, devices (13, 17, 19, 22, 25) for heating drying gas (12), and blower devices (11) for subjecting the material (3) to be dried to the action of the drying gas (12), wherein the drier has at least two drying chambers (4, 5, 7, 9) through which the material (3) to be dried is successively conveyed, and wherein at least one drying chamber (4, 5) has a closed drying gas circuit with a condenser (15) and wherein at least one further drying chamber (7, 9) which follows in the conveyor direction of the conveyor means (1, 2) has a heat exchanger (19, 25) connected to the condenser (15) for heating the drying gas (12),
**characterised by** a hygienisation chamber (8) arranged downstream of a drying chamber (7) with means (24) for heating the material (3) to be dried to at least 70°C, if possible 80°C, wherein the hygienisation chamber (8) has no waste gas discharge and no condensate discharge.

10. A drying installation according to claim 9 **characterised in that** the conveyor means (1, 2) is a belt conveyor with a gas-permeable conveyor belt, wherein the drying gas (12) flows through the conveyor belt in the drying chambers (4, 5, 7, 9), by means of the blower devices (11).

11. A drying installation according to claim 9 or claim 10 **characterised in that** at least one drying chamber (5, 7) has a heat exchanger, by means of which the drying gas (12) can be heated by waste heat (18), in particular power station waste heat.

12. A drying installation according to one of claims 9 to 11 **characterised by** at least one heat pump which serves at the same time as a condenser and as a device for heating the drying gas.

## Revendications

1. Procédé pour sécher par convection un objet mouillé ou humide, l'objet à sécher présentant au moins un niveau de séchage dans un sécheur et étant alimenté ici avec un gaz de séchage réchauffé, lequel circule dans ce niveau de séchage dans le circuit fermé et absorbe lors de l'opération de séchage l'eau contenue dans l'objet à sécher et duquel l'eau absorbée est retirée à nouveau par condensation, la chaleur de condensation se formant dans ce niveau de séchage étant utilisée pour réchauffer le gaz de séchage dans au moins un niveau de séchage consécutif,
**caractérisé en ce que** l'objet à sécher est soumis, après le passage dans un niveau de séchage, à une hygiénisation dans un niveau intermédiaire, du fait que l'objet est réchauffé à une température prédéfinie de plus de 70°C, si possible 80°C, sachant que ni du gaz brûlé n'est évacué ni du condensat n'est généré.

2. Procédé selon la revendication 1, **caractérisé en ce que** la chaleur, qui est incluse dans le condensat se formant dans un niveau de séchage, est utilisée pour réchauffer le gaz de séchage dans un niveau de séchage consécutif.

3. Procédé selon la revendication 1 ou 2, **caractérisé en ce que**, après le passage dans un niveau de séchage, dans lequel le gaz de séchage circule dans le circuit fermé, l'objet à sécher traverse au moins un niveau de séchage consécutif, dans lequel le gaz de séchage réchauffé au moyen de la chaleur de condensation est évacué après l'opération de séchage au moins en partie sous forme de gaz brûlé.

4. Procédé selon l'une quelconque des revendications 1 à 3, **caractérisé en ce que** de la chaleur perdue, en particulier de la chaleur perdue de centrale, est utilisée pour réchauffer le gaz de séchage dans au moins un niveau de séchage.

5. Procédé selon l'une quelconque des revendications 1 à 4, **caractérisé en ce que** dans un niveau de séchage, dans lequel le gaz de séchage circule dans le circuit fermé, la température de l'objet à sécher est de 70°C au maximum.

6. Procédé selon l'une quelconque des revendications 1 à 5, **caractérisé en ce que** la température du gaz de séchage ne dépasse pas 120°C dans aucun niveau de séchage.

7. Procédé selon l'une quelconque des revendications 1 à 6, **caractérisé en ce que** la température du gaz de séchage décroît d'un niveau de séchage à l'autre.

8. Procédé selon l'une quelconque des revendications 1 à 7, **caractérisé en ce que**, après le séchage, l'objet traverse un niveau de refroidissement dans lequel l'objet est refroidi avec l'arrivée d'air frais.

9. Installation de séchage comprenant un moyen de transport (1, 2) disposé à l'intérieur d'un sécheur pour le transport de l'objet (3) à sécher à travers le sécheur, des dispositifs (13, 17, 19, 22, 25) pour le réchauffement de l'air de séchage (12), et des dispositifs de soufflerie (11) pour l'alimentation de l'objet (3) à sécher avec le gaz de séchage (12), le sécheur présentant au mois deux chambres de séchage (4, 5, 7, 9), à travers lesquelles l'objet (3) à sécher est transporté de façon successive, et au moins une chambre de séchage (4, 5) présentant un circuit à gaz de séchage fermé avec un condenseur (15) et au moins une autre chambre de séchage (7, 9), consécutive dans le sens de transport du moyen de transport (1, 2) présentant un échangeur de chaleur (19, 25) relié au condenseur (15) pour le réchauffement du gaz de séchage (12),
**caractérisée par** une chambre d'hygiénisation (8) placée en aval d'une chambre de séchage (7) avec des moyens (24) pour le réchauffement de l'objet (3) à sécher jusqu'à au moins 70°C, si possible 80°C, la chambre d'hygiénisation (8) ne présente pas d'évacuation du gaz brûlé et pas d'évacuation du condensat.

10. Installation de séchage selon la revendication 9, **caractérisée en ce que** le moyen de transport (1, 2) est un transporteur à bande avec une bande transporteuse perméable au gaz, la bande transporteuse étant traversée dans les chambres de séchage (4, 5, 7, 9) par le gaz de séchage (12) au moyen des dispositifs de soufflerie (11).

11. Installation de séchage selon la revendication 9 ou 10, **caractérisée en ce qu'**au moins une chambre de séchage (5, 7) présente un échangeur de chaleur au moyen duquel le gaz de séchage (12) peut être réchauffé par la chaleur perdue (18) en particulier de la chaleur perdue de centrale.

12. Installation de séchage selon l'une quelconque des revendications 9 à 11, **caractérisée par** au moins une pompe à chaleur, qui sert en même temps de condenseur et de dispositif pour réchauffer le gaz de séchage.
